Europäisches Patentamt

European Patent Office

Office européen des brevets

(19)

(11) EP 0 729 701 A2

(12) EUROPEAN PATENT APPLICATION

(43) Date of publication:
04.09.1996 Bulletin 1996/36

(51) Int Cl.6: A01N 25/18, A01N 47/14,
A01N 47/46, A01G 13/06,
A01M 13/00, B27K 3/36

(21) Application number: 96300615.0

(22) Date of filing: 30.01.1996

(84) Designated Contracting States:
BE DE ES FR GB GR IT NL PT

(30) Priority: 10.02.1995 JP 45032/95

(71) Applicant: ROHM AND HAAS COMPANY
Philadelphia, Pennsylvania 19106-2399 (US)

(72) Inventors:
• Tanaka, Ren
Kitakatsushika-Gun, Saitama (JP)
• Ichikawa, Yoshiko
Kazo City, Saitama (JP)
• Ichikawa, Teruo
Kazo City, Saitama (JP)

(74) Representative: Tanner, James Percival et al
ROHM AND HAAS (UK) LTD.
European Operations Patent Department
Lennig House
2 Mason's Avenue
Croydon CR9 3NB (GB)

(54) **Method for controlling harmful living organisms**

(57) The present invention provides a method for controlling harmful living organisms, for example in closed agricultural or horticultural facilities, in which a solution comprising an active ingredient is misted, the active ingredient is vaporized, and the vaporized active ingredient is contacted with the harmful living organisms.

EP 0 729 701 A2

**Description**

The present invention is concerned with a method for controlling harmful living organisms.

Heretofore, in order to combat harmful living organisms in enclosed agricultural and horticultural facilities, chemicals such as fungicides, insecticides, nematocides and herbicides have been applied such that the chemicals are sufficiently distributed within the closed facility. Various methods have been employed to apply the chemicals, such as power sprays, fumigators, fog machines and flow dust applicators. For example, Japanese Patent Kokai Hei 1-206002 discloses a method for controlling harmful living organisms in agricultural and horticultural facilities by applying a monomethyl dithiocarbamate salt. Japanese Patent Kokai Hei 1-206002 also discloses a method for controlling harmful living organisms in wood, and thereby preventing deterioration of the wood, using a monomethyl dithiocarbamate salt.

However, a disadvantage of spraying a liquid for the control of harmful living organisms in closed systems is that large loss of active ingredient occurs and this loss increases as the sprayed particles become finer and as the atmospheric temperature or application temperature increases (e.g. temperature increase can give rise to decomposition of active compounds and, hence, loss of active ingredient).

There, therefore, exists a need for a more economical and safer method for controlling harmful living organisms, and also for a method for controlling harmful living organisms which requires shorter application times.

Since treatments for the control of harmful living organisms are usually carried when necessary, this can give rise to such treatments being carried out under various environmental conditions and may, therefore, lead to long application times being required with conventional treatments (e.g. in closed facilities). For example, in cold environmental conditions (e.g. in winter) conventional treatments often require long application times. There is, consequently, also a need for a method for controlling harmful living organisms which can be effectively used in various environmental conditions and which requires shorter application times in such various conditions.

The ability to effectively control harmful living organisms in various environmental conditions with shorter application times is important due to the timing of seeding and planting operations and the consequential timing of treatments for the control of harmful living organisms, and is also important to enable efficient agricultural/horticultural facility utilization.

Methyl bromide has been used for a long time to control harmful living organisms in agricultural products and wood. However, the use of methyl bromide is disadvantageous due to its destructive effect on ozone and, hence, its deleterious effect on the environment. A need, therefore, also exists for an alternative to methyl bromide which avoids the deleterious environmental effect of the use of methyl bromide.

We have now found a method for controlling harmful living organisms whilst enabling harmful effects on the human body, useful living organisms and the environment, both during and after treatment, to be minimized or avoided. The method further enables the control of harmful living organisms without fouling such as staining. The method still further enables the control of harmful living organisms using a shorter treatment time and less loss of active ingredient when compared to known spraying techniques. The method still further enables effective control of harmful living organisms without the use of methyl bromide.

According to the present invention there is provided a method for controlling harmful living organisms, which comprises generating a mist from a solution comprising a compound having biological activity, heating the mist to vaporize said compound, and contacting harmful living organisms with said vaporized compound.

Examples of compounds having biological activity, and which may be used in the method of the present invention, include: water-soluble salts of monoalkyl dithiocarbamates, preferably the sodium, ammonium, potassium, calcium and magnesium salts of monomethyl dithiocarbamate (vapam which is the sodium salt of monomethyl dithiocarbamate) and monoethyl dithiocarbamate (e.g. NCS which is the ammonium salt of monomethyl dithiocarbamate); water-soluble salts of alkylene bisdithiocarbamates, preferably the sodium, potassium, calcium and magnesium salts of ethylene bisdithiocarbamate (nabam which is the sodium salt of ethylenebisdithiocarbamate), and the ammonium, potassium, calcium and magnesium salts of propylene bisdithiocarbamate; water-soluble salts of dialkyl dithiocarbamates, preferably the sodium, ammonium, calcium and magnesium salts of dimethyl dithiocarbamate, diethyl dithiocarbamate and dibutyl dithiocarbamate; methyl isothiocyanate (MITC); dimethyl S-2-(1-methylcarbamoylethylthio)ethyl phosphorothioate (vamidothion); O,S-dimethyl-N-acetylphosphoroamidothioate (acephate); dimethyl-2,2,2-trichloro-1-hydroxyethylphosphonate (DPE); (RS)-alpha-cyano-3-phenoxybenzyl-(S)-2-(4-difluoromethoxyphenyl)-3-methylbutyrate (flucythrinate); 1,3-bis(carbamoylthio)-2-(N,N-dimethylamino)propane hydrochloric acid salt (cartap); L-2-amino-4-[(hydroxy)(methyl)phosphinoyl]-butyryl-L-alanyl-L-alanine sodium salt ( bialafos); trans-1,4,5,6-tetrahydro-1-methyl-2-[2-(3-methyl-2-thienyl)vinyl]pyrimidine tartrate (morantel tartrate), (-)-(s)-2,3,5,6-tetrahydro-6-phenylimidazo [2,1-b]thiazole ( levamizol); kasugamycin hydrochloric acid (kasugamycin); polyoxine complex (polyoxin); validamycin A; streptomycin salt (streptomycin); midiomicin; 1,1'-iminiodi (octamethylene) diguanidium triacetate (iuminoctagine acetic acid salt); and 2-methyl-4-chlorophenoxy butyric acid (MCPB).

Preferable compounds having biological activity, for use in the method of the present invention, are water-soluble salts of monoalkyl dithiocarbamates and methyl isothiocyanate. Preferably, the water-soluble salts of monoalkyl dithiocarbamates are water-soluble salts of monomethyl dithiocarbamate, for example, the sodium, ammonium or potassium salt of monomethyl dithiocarbamate. Most preferably, the water-soluble salt of monomethyl dithiocarbamate is the sodium salt of monomethyl dithiocarbamate.

More preferably, the compound having biological activity, for use in the method of the present invention, is methyl isothiocyanate.

The water-soluble salts of monomethyl dithiocarbamate, which may be used in the method of the present invention, are classified as safe materials from the standpoint of the Japanese Poisonous and Deleterious Substance Control Law. The toxicity to fish of such compounds is low and such compounds are regarded as safe compounds for agricultural and horticultural uses. For example, such compounds can be used on mountainsides, valleys or town areas, and small or large dosages may be used.

A solution of the compound having biological activity is convenient to handle and such solution is preferably a solution of the compound in water.

The mist of the solution comprising the compound having biological activity may be formed using known mist generating equipment. The particle size of the mist is determined by the type of mist generator used and the operating conditions. It is desirable to adjust the particle size of the mist so as not to give rise to any deleterious effect in the subsequent heating and contacting steps of the method of the method of the present invention.

The water-soluble salts of monomethyl dithiocarbamates, which may be used in the present invention, are generally kept preserved and stored in the form of a concentrated solution. Therefore, in order to mist such material effectively, the concentrated solution should be diluted, preferably to a solution containing 1-50% by weight of the salt, and more preferably to a solution containing 1-40% by weight of the salt, prior to misting.

The heating of the mist may be conducted by methods in which the mist is in direct or indirect contact with the heat source. For example, the mist may be heated by means of a heat exchanger or by contacting the mist with a flow of hot air. If the heating is too excessive, an increase in degradation by-products or a decrease in the level of the active ingredient may occur. Therefore, it is preferable to adjust the heating conditions, such as the temperature of the heat source and/or time of contact of the mist with the heat source, in order to minimize or avoid such increased degradation, or decrease in level, of the active ingredient.

Preferably, the heating is conducted by means of a flow of hot air. When a water soluble salt of a monoalkyl dithiocarbamate is used, the heating is preferably conducted using a flow of hot air, and the temperature is preferably from 70 to 150°C, more preferably, from 80 to 130°C.

Preferably, the gaseous compound having biological activity is contacted with the harmful living organisms at a concentration of from 10 to 10,000 ppm, more preferably at a concentration of from 100 to 10,000 ppm. Preferably, the gaseous compound having biological activity is contacted with the harmful living organisms by introducing the gaseous compound into a closed system, for example, a closed agricultural or horticultural facility. For example, the gaseous compound may be introduced, preferably at a level of from 10 to 10,000 ppm, into a house, e.g. a store house, containing crops or wood and harmful living organisms.

In the case of wood treatment using the known spraying method, water-soluble salts of monomethyl dithiocarbamate have been applied by spraying and thereafter the wood has been left for from 10-14 days. In contrast, using the method of the present invention, effective control of harmful living organisms in wood can be achieved in, for example, 1 to 3 days. Further, upon treating wood with a water-soluble salt of monomethyl dithiocarbamate using the known spraying technique, the water-soluble salt of monomethyl dithiocarbamate has typically been used in an amount of from 150 to 500 grams per cubic meter of wood space volume. However, it has been found that, using the method of the present invention, the water soluble salts of monomethyl dithiocarbamate may be used in an amount of from 0.05 to 500 grams, preferably in an amount of from 0.05 to 200 grams, and more preferably in an amount of from 1 to 100 grams, per cubic meter of wood space volume to effectively control harmful living organisms.

The harmful living organisms which can be controlled using the method of the present invention are different depending on the type of compound having biological activity used. For example, appropriate compounds having biological activity can be readily selected depending on the type of harmful living organisms to be controlled and the known effects, on harmful living organisms, of compounds having biological activity. For example, in agricultural and horticultural sites, the harmful living organisms to be controlled include insects, nematodes, mites, fungi, and bacteria, e.g. attached to non-harmful living organisms, glasses and vinyl chloride sheets in the sites, and insects, nematodes, mites, fungi, bacteria, weeds, and undesirable seeds in or on plants or the soil in the sites. For the purpose of treating crops or wood, e.g. imported crops or wood, compounds can be selected depending on the harmful living organisms to be controlled, such as insects, nematodes, mites, fungi, weeds, bacteria and Rodentia animals.

The preferable water-soluble salts of monoalkyl dithiocarbamates may, for example, be used to effectively control mites, insects, nematodes, fungi and bacteria attached to plants after harvest, glasses or vinyl chloride sheets in agricultural or horticultural sites. These compounds are also effective to control insects, fungi, bacteria, mites, nematodes, weeds and undesirable seeds on or in the soil and plants. Further, in the case of crops, wood or felled trees, for example imported crops, imported wood or felled trees, such compounds have been found to be effective to control insects, mites, nematodes, weeds, fungi and bacteria.

The water-soluble monoalkyl dithiocarbamates have been found to be especially effective against Monochamus alternatus, Semanotus japoicus (Lacordaire), Anaglyptus subfasciatus (Pic), Demonax transilis (Bates) and Tricodelama.

The solution comprising the compound having biological activity, used in the method of the present invention, may additionally comprise one or more additives, for example, one or more of spreaders, emulsifiers and stabilizers.

Further depending on the desired use, the solution comprising the compound having biological activity, may additionally comprise one or more other known biologically active compounds such as one or more other fungicide, insecticide and disinfectant.

In one embodiment of the present invention, means for circulating the vaporized compound having biological activity within a particular site, for example an agricultural or horticultural facility/house, may be provided.

By practice of the method of the present invention, the harmful living organisms may be contacted with an increased level of the compound having biological activity when compared to the same method but omitting the heating step.

According to the present invention there is also provided an apparatus for controlling harmful living organisms, which comprises a tank for a solution comprising a compound having biological activity, means for producing a mist of the solution, means for heating the mist to vaporize the compound having biological activity, and means for transferring the vaporized compound to a desired site.

As the compound having biological activity may be corrosive, so the materials of the various parts of the tank should be selected taking this into consideration. For example, since monomethyl dithiocarbamate salt is corrosive to iron, the tank is preferably constructed of stainless steel or a synthetic resin.

The means for generating a mist may, for example, be a known misting apparatus. For example, air jetting, ultrasonic wave, or a combination thereof may be utilized.

The means for heating the mist to vaporise the compound having biological activity may, for example, be a known heating device, such as the heating devices mentioned above.

Preferably, a combination of a fan and a heating means is utilized. In this case the temperature of the hot air flow and the volume of air is determined in accordance with the amount of mist generated and the contact time of the mist with the hot air flow.

The means for transferring the vaporized compound having biological activity to the desired site is preferably a conduit. The shape, position and length of such means, for example of such conduit, is chosen in accordance with the shape of the facility into which the gaseous compound is to be introduced.

Some embodiments of the present invention will now be described in detail in the following Examples.

## EXAMPLES

### Example 1:

Five samples of red pine, which were affected by Monochamus alternatus (Hope) or Bursaphelenchus xylophilus, were cut into 40 cm lengths and were placed in a plastic vessel (50cm x 40cm x 30cm). This vessel was covered and a mist conduit pipe was attached to an opening at one side thereof.

A mist was formed from a solution of a compound having biological activity using an ultrasonic mist generator. The mist was then heated to 80°C and introduced into the vessel through the conduit by means of a fan.

For comparison, further samples of the red pine were treated with the solution of the compound having biological activity using a conventional spray method.

After application of the solution of the compound having biological activity, each vessel containing the test sample of red pine was closed and stored for 24 hours.

A comparison test was also conducted in which samples of the red pine were stored untreated for 24 hours (i.e. the same length of time as in the above treatments according to the present invention and according to the conventional spray method).

In the case of Bursaphelenchus xylophilus, the detection of nematodes was conducted, using the Berman method, by hollowing out 10g of wood strips from each infected length using a 10mm drill and the number of nematodes was calculated.

In the case of Monochamus alternatus (Hope), the death of larvae was examined by splitting the wood.

The results obtained are given in Table 1 below.

**TABLE 1**

| Treatment | | Application Amount | Bursaphelenchus xylophilus | | | Monochamus alternatus (Hope) | | |
|---|---|---|---|---|---|---|---|---|
| | Chemical | $(g/m^3)$ | pretreatment | Post treatment | Mortality(%) | alive | dead | Mortality(%) |
| Method of | A | 50 | 1051 | 0 | 100 | 0 | 66 | 100 |
| the present | | 100 | 617 | 0 | 100 | 0 | 53 | 100 |
| invention | | 150 | 799 | 0 | 100 | 0 | 58 | 100 |
| Method of | B | 50 | 1253 | 0 | 100 | 0 | 58 | 100 |
| the present | | 100 | 678 | 0 | 100 | 0 | 45 | 100 |
| invention | | 150 | 1167 | 0 | 100 | 0 | 60 | 100 |
| Conventional | A | 50 | 892 | 504 | 38.2 | 29 | 21 | 39.7 |
| method | | 100 | 538 | 226 | 54.0 | 15 | 42 | 72.7 |
| | | 150 | 964 | 33 | 96.3 | 8 | 53 | 86.4 |
| Conventional | B | 50 | 703 | 304 | 45.0 | 28 | 31 | 50.7 |
| method | | 100 | 1337 | 468 | 62.5 | 19 | 24 | 54.1 |
| | | 150 | 1122 | 87 | 91.5 | 7 | 64 | 89.8 |
| Comparison | nontreatment | | 1087 | 993 | 0 | 52 | 2 | 0 |

1. A = Sodium N-monomethyl dithiocarbamate.
2. B = Ammonium N-monomethyl dithiocarbamate.
3. <u>Bursaphelenchus xylophilus</u>: Percentage of mortality was calculated using the following formula:

$$\text{Percent of mortality} = (1-(T_a/T_b \times C_b/C_a)) \times 100$$

where

$T_a$ = number of nematodes after treatment at treated sites.
$T_b$ = number of nematodes before treatment at treated sites.
$C_a$ = number of nematodes after 24 hours in the non-treated comparison test.
$C_b$ = number of nematodes initially present in the non-treated comparison test.

4. <u>Monochamus alternatus (Hope)</u>:- Percent mortality was calculated using the following formula:-

$$\text{Percent mortality} = \frac{(q_o - q)}{q_o} \times 100$$

where:

$q_o$ = percent of surviving larvae for the non treated sites.
$q$ = percent of surviving larvae for the treated sites.

## **Example 2:**

Pine trees, infected with <u>Bursaphelenchus xylophilus</u> and <u>Monochamus alternatus</u>, were cut into round slices of 1m length and these slices were piled up into cubes, each having a volume of $0.5m^3$. These cubes were covered with a vinyl chloride sheet. A mist conduit pipe was then connected to an opening at one side of the vinyl chloride sheet.

A mist was formed from a solution of a compound having biological activity using an ultrasonic mist generator. The mist was then heated to 80°C and introduced within the vinyl chloride cover through the conduit pipe.

For comparison, further samples of the infected pine trees were treated with the solution of the compound having biological activity using a conventional spray method.

After application of the solution of the compound having biological activity, the opening of each covered cube was closed. After 2 days the cubes were uncovered.

A comparison test was also conducted in which samples of the infected pine were stored untreated for 2 days (i. e. the same length of time as in the above treatments according to the present invention and according to the conventional spray method.

In the case of <u>Bursaphelenchus xylophilus</u>, the detection of nematodes was calculated, using the Berman method, by hollowing out 10g of wood strips from each infected sample of wood using a 10mm drill and the number of nematodes was calculated.

In the case of <u>Monochamus alternatus</u>, the death of larvae was examined by splitting the wood.

The results obtained are given in Table 2 below.

## TABLE 2

| Treatment | Chemical | Application Amount (g/m³) | Bursaphelenchus xylophilus | | | Monochamus alternatus | | |
|---|---|---|---|---|---|---|---|---|
| | | | pretreatment | Post treatment | Mortality(%) | alive | dead | Mortality(%) |
| Present invention | A | 50 | 952 | 0 | 100 | 0 | 41 | 100 |
| Present invention | B | 50 | 619 | 0 | 100 | 0 | 54 | 100 |
| Comparison | nontreatment | | 965 | 987 | 0 | 66 | 1 | 0 |

In Table 2:

1. A = Sodium N-monomethyl dithiocarbamate.
2. B = Ammonium N-monomethyl dithiocarbamate.
3. <u>Bursaphelenchus xylophilus</u>: Percentage of mortality was calculated using the following formula:-

$$\text{Percent of mortality} = (1-(T_a/T_b \times C_b/C_a)) \times 100$$

where:

$T_a$ = number of nematodes after treatment at treated sites.
$T_b$ = number of nematodes before treatment at treated sites.
$C_a$ = number of nematodes after 2 days in the non-treated comparison test.
$C_b$ = number of nematodes initially present in the non-treated comparison test.

4. <u>Monochamus alternatus</u>:
Percent mortality was calculated using the following formula:

$$\text{Percent mortality} = \frac{(q_o - q)}{q_o} \times 100$$

where:

$q_o$ = percent of surviving larvae for the non -treated sites.
$q$ = percent of surviving larvae for the treated sites.

<u>Example 3</u>:

The treatment test was conducted in a small vinyl greenhouse.

A mist was formed from a solution of a compound having biological activity using an ultrasonic mist generator. The mist was then introduced into the greenhouse through a conduit pipe by means of a flow of air at 70°C. In the vinyl greenhouse, potted cucumbers, weeds (<u>poa annua L</u>), larvae (5 worms at each segment), and aphids (parasitic to potted cucumbers) were placed. 24 hours after treatment observations were conducted by calculating the percent of mortality (confirming life or death of harmful worms-cockroach/<u>mimela splendeus</u>) and by observing the percent of wither of cucumber and weeds.

The results obtained are given in Table 3 below:

In Table 3:

## TABLE 3

| Treatment | | MITC -concentration | Wither (%) | | Mortality (%) | |
|---|---|---|---|---|---|---|
| | Chemical | (ppm) | Cucumber | Weed | Mimela splendeus | cockroach |
| Present | A | 10 | 80 | 50 | 80 | 100 |
| invention | | 100 | 100 | 100 | 100 | 100 |
| | | 1000 | 100 | 100 | 100 | 100 |
| Present | B | 10 | 85 | 60 | 80 | 100 |
| invention | | 100 | 100 | 100 | 100 | 100 |
| | | 1000 | 100 | 100 | 100 | 100 |
| Comparison | nontreatment | | 0 | 0 | 0 | 0 |

1. A = Sodium N-monomethyl dithiocarbamate.
2. B = Ammonium N-monomethyl dithiocarbamate.
3. MITC = methyl isothiocyanate.
4.

$$\text{Percent of mortality of larvae} = \frac{(q_o - q)}{q_o} \times 100$$

where;

$q_o$ = percent of surviving larvae for the non-treated sites.
$q$ = percent of surviving larvae for the treated sites.

* MITC is active in the control of harmful living organisms.

## EXAMPLE 4:

An opening was made at one side of a small vinyl greenhouse and a mist conduit pipe was attached to this opening.

A mist was formed of a solution of N-monomethyl dithiocarbamate, ammonium salt in 200 cc of water (17% solution) using an ultrasonic mist generator.

The mist was then transferred into the greenhouse by means of a flow of air at a temperature of 80°C.

One minute after completion of the introduction of the heated mist into the greenhouse, 5 ml of gas was removed from the greenhouse, using a gas collector, and was immediately collected in cooled ethanol. The concentration of decomposed gas (i.e. amount of MITC - methyl isothiocyanate) was measured by gas chromatographic analysis with a flame photometric detector (FPD) (Hitachi Co., Ltd.).

The above procedure was repeated except that the temperature of the flow of air was 15°C (i.e. ambient temperature).

The results obtained are given in Table 4 below.

TABLE 4

| Agent | Air Flow Temperature | Amount of MITC* |
|---|---|---|
| N-monomethyl dithiocarbamate, ammonium salt | 80°C | 1187ppm |
| N-monomethyl dithiocarbamate, ammonium salt | 15°C | 210ppm |

* MITC is active in the control of harmful living organisms.

## Claims

1. A method for controlling harmful living organisms, which comprises generating a mist from a solution comprising a compound having biological activity, heating the mist to vaporize said compound, and contacting harmful living organisms with said vaporized compound.

2. A method as claimed in claim 1, wherein the compound having biological activity is a water soluble salt of a monoalkyl dithiocarbamate, or is methyl isothiocyanate.

3. A method as claimed in claim 2, wherein the compound having biological activity is sodium monomethyl dithiocarbamate or ammonium monomethyl dithiocarbamate.

4. A method as claimed in claim 2, wherein the compound having biological activity is methyl isothiocyanate.

5. A method as claimed in any preceding claim, wherein the solution comprising the compound having biological activity is an aqueous solution.

6. A method as claimed in any preceding claim, wherein the heating is effected by means of a flow of hot air.

7. A method as claimed in any preceding claim, wherein the harmful living organisms are located in wood material.

8. A method as claimed in any of claims 1 to 6, wherein the harmful living organisms are located in closed agricultural or horticultural facilities, or the soil thereof.

9. A method as claimed in any preceding claim, wherein the harmful living organisms are contacted with an increased level of the compound having biological activity when compared to the same method but omitting the heating step.

10. Apparatus for controlling harmful living organisms, which comprises a tank for a solution comprising a compound having biological activity, means for producing a mist of the solution, means for heating the mist to vaporize the compound having biological activity, and means for transferring the vaporized compound to a desired site.